# EUROPÄISCHE PATENTSCHRIFT

(11) **EP 1 242 754 B1**
(45) Veröffentlichungstag und Bekanntmachung des Hinweises auf die Patenterteilung: **02.01.2004**
(21) Anmeldenummer: 00993735.0
(22) Anmeldetag: 06.12.2000
(51) Int. Cl.: F16F 15/00, B41F 13/08

(54) **VERFAHREN UND ANORDNUNG ZUR KOMPENSATION VON SCHWINGUNGEN ROTIERENDER BAUTEILE**
METHOD AND SYSTEM FOR COMPENSATING THE VIBRATIONS OF ROTATING COMPONENTS
PROCEDE ET DISPOSITIF POUR LA COMPENSATION DE VIBRATIONS DE COMPOSANTS ROTATIFS

(30) Priorität: 31.12.1999 DE 19963945
(43) Veröffentlichungstag der Anmeldung: 25.09.2002
(73) Patentinhaber: Koenig & Bauer Aktiengesellschaft, 97080 Würzburg (DE)
(72) Erfinder: GLÖCKNER, Erhard, Herbert, 97246 Eibelstadt (DE); KELLER, Bernd, Ulrich, Herbert, 97204 Höchberg (DE)
(86) Internationale Anmeldenummer: PCT/DE2000/004338
(87) Internationale Veröffentlichungsnummer: WO 2001/050035

(56) Entgegenhaltungen:
- WO-A-97/03832
- DE-A- 3 230 120
- DE-A- 3 637 571
- DE-A- 4 008 568
- US-A- 5 235 909
- US-A- 5 921 150

## Beschreibung

Die Erfindung betrifft ein Verfahren sowie eine Anordnung gemäß dem Oberbegriff der Ansprüche 1, 2 oder 27.

Durch die WO 97/ 03 832 ist ein Verfahren und eine Vorrichtung zur Verminderung von Biegeschwingungen bei rotierenden Systemen bekannt.

Die US 59 21 150 A zeigt eine Anordnung zur Verminderung von Biegeschwingungen bei rotierenden Bauteilen mittels eines im rotierenden Bauteil angeordneten Aktuators, der eine in axialer Richtung des rotierenden Bauteils wirkende Kraftkomponente aufweist.

Der Erfindung liegt die Aufgabe zugrunde, Biegeschwingungen bei rotierenden Bauteilen zu verringern.

Die Aufgabe wird erfindungsgemäß durch die Merkmale der Ansprüche 1, 2 oder 27 gelöst.

Die mit der Erfindung erzielbaren Vorteile bestehen insbesondere darin, daß Biegeschwingungen reduziert werden. Von besonderem Vorteil ist die Reduzierung der schädlichen Wirkungen sogenannter "Kanalschläge" bei Zylindern in Rotationsdruckmaschinen.

Ein Ausführungsbeispiel der Erfindung ist in der Zeichnung dargestellt und wird im folgenden näher beschrieben.

Es zeigen:
- Fig. 1: eine Vorderansicht eines Zylinders einer Rotationsdruckmaschine im Ruhezustand;
- Fig. 2: eine Vorderansicht analog zu Fig. 1, im Betriebszustand;
- Fig. 3: einen Querschnitt III - III durch den Zylinder nach Fig. 1 in vergrößerter Darstellung;
- Fig. 4: einen Querschnitt durch einen Zylinder einer Rotationsdruckmaschine in einem weiteren Ausführungsbeispiel.

Ein rotierendes Bauteil, z. B. ein Zylinder, wie Formzylinder, Übertragungszylinder, Gegendruckzylinder, Farb-, Feucht- oder Leitwalzen - weiterhin als Zylinder 01 bezeichnet - weist beidendig nicht dargestellte Zapfen auf. Am Umfang 04 des Zylinders 01 und etwa in der Mitte der Ballenlänge I ist eine Ringnut 06 vorgesehen, welche eine Vielzahl, z. B. 12 Aktuatoren 20 bis 31 aufnimmt. Die Aktuatoren 20 bis 31 sind innerhalb der Umfangslinie des Zylinders 01 angeordnet.

Es können auch eine Mehrzahl, z. B. drei oder fünf voneinander in axialer Richtung beabstandeter Ringnuten 06 mit Aktuatoren 20 bis 31 auf dem Zylinder 01 vorgesehen sein. In axialer Richtung heißt: in Richtung der Rotationsachse 07 des Zylinders 01.

Jede Ringnut 06 ist in Richtung Mantelfläche des Zylinders 01 z. B. mit aushärtbarem Kunststoff verfügbar.

Die Aktuatoren 20 bis 31 können z. B. aus Piezoelementen oder Zweischichtelementen bestehen. Weiterhin kann jeder Aktuator auch aus einer Zylinder-Kolbeneinheit bestehen, welche pneumatisch oder hydraulisch betätigbar ist.

Von Vorteil ist es weiterhin, einen Aktuator einzusetzen, welcher geschichtete Piezofäden mit Kupferfolienanoden aufweist. Dieser Aktuator vergrößert seine Länge beim Anlegen einer Spannung.

Auf der Mantelfläche des Zylinders 01 können Sensoren, z. B. Piezokeramikdruckkraftaufnehmer angeordnet sein. Dies kann unter dem Gummituch oder der Druckform des Zylinders 01 sein. Sowohl die Aktuatoren 20 bis 31 als auch die Sensoren sind mit einem Regler verbindbar. Der Regler kann innerhalb oder auch außerhalb des Zylinders 01 angeordnet sein.

Es ist auch möglich, jeden Aktuator 20 bis 31 gleichzeitig als Sensor zu nutzen.

Eine Energieübertragung und/oder Informationsübertragung zwischen Regler und Sensoren sowie Regler zu Aktuatoren erfolgt vorzugsweise kontaktlos.

Die Aktuatoren 20 bis 31 können mittels einer Steuerleitung 08 untereinander verbunden sein.

Der Zylinder 01 weist einen in achsparalleler Richtung sowie in der Nähe des Umfanges 04 befindlichen Kanal 09 auf. Dieser Kanal 09 beinhaltet bekannte technische Mittel zum Festhalten und/oder Spannen der Enden von Druckformen oder Gummibezügen des Zylinders 01 oder der Walze. Ebenso kann im Zylinder 01 eine Ausgleichsbohrung 11 zur Aufnahme von Mitteln zum Beseitigen einer Unwucht vorgesehen sein.

Die Anordnung arbeitet wie folgt: Die Sensoren oder auch Aktuatoren ermitteln die aktuellen Werte der Durchbiegung des Zylinders 01 während des Betriebszustandes an einer bestimmten Stelle des Umfanges 04.zu einem und/oder mehreren bestimmten Zeitpunkten. Diese Werte werden dem Regler zugeführt, welcher wiederum die jeweiligen Aktuatoren 20 bis 31 mit einem bestimmten Wert beaufschlagt. Diese Aktuatoren 20 bis 31 verändern ihre Größe in axialer oder nahezu axialer Richtung des Zylinders. Nahezu axiale Richtung heißt: zumindest eine axiale Komponente aufweisend. Somit wird der Zylinder 01 an einer bzw. mehreren definierten Stellen zum jeweiligen Zeitpunkt gedehnt bzw. gelängt oder verkürzt, was die Durchbiegung des Zylinders 01 beeinflußt.

Die Kraftkomponente bzw. die Größe des Aktuators 20 bis 31 in axialer Richtung wird in Abhängigkeit einer Drehwinkellage des Zylinders 01 verändert.

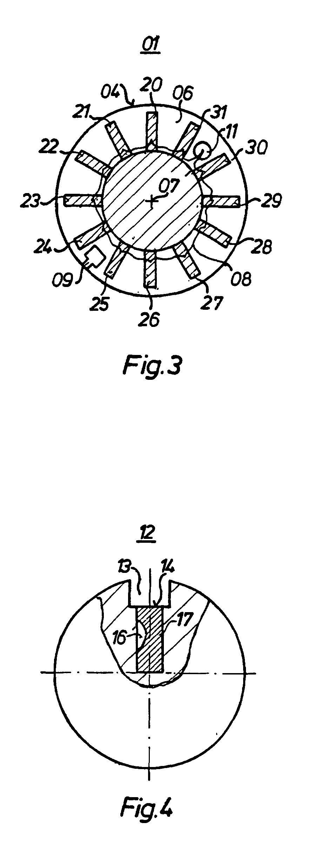

Nach einer anderen Ausführungsvariante (Fig. 4) kann ein rotierendes Bauteil, z. B. ein Zylinder 12 oder Walze für eine Rotationsdruckmaschine einen in achsparalleler Richtung verlaufenden Kanal 13 aufweisen, welcher auf seiner Bodenfläche 14 z. B. eine Sacklochbohrung 16 zur Aufnahme eines Aktuators 17 aufweist. Dieser Aktuator 17 kann in der Mitte der Ballenlänge des Zylinders 12 angeordnet und als sogenannte "Adaptronik" ausgebildet sein. Es ist natürlich auch möglich, mehrere in axialer Richtung des Zylinders 12 voneinander beabstandete Aktuatoren 17 unter der Zylindermantelfläche anzuordnen.

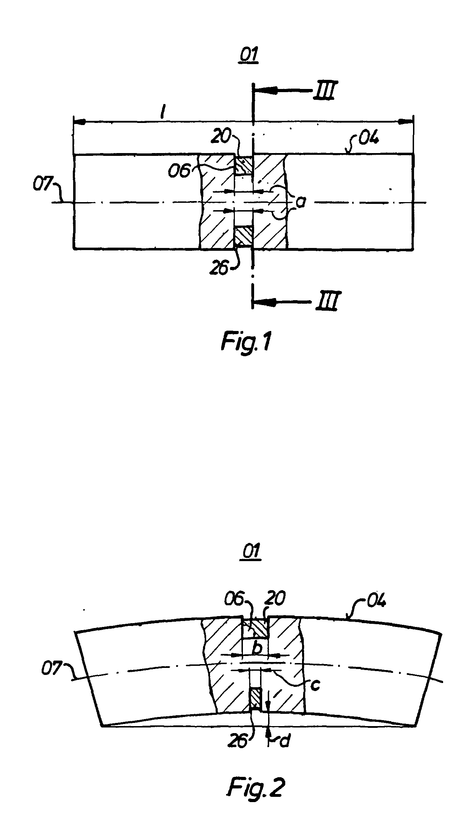

Schließlich ist es auch möglich, die Aktuatoren 20 bis 31 mit einer Vorspannung zu versehen, unabhängig davon, ob es sich dabei um einen elektrisch oder pneumatisch betätigbaren Aktuator handelt. In diesem Falle hat jeder Aktuator 20 bis 31 bereits im Ruhezustand des Zylinders 01 eine mittlere Längenausdehnung a (Fig. 1).

Während des Betriebszustandes des Zylinders 01 nach Fig. 2 wird ein Betrag d einer Durchbiegung des Zylinders 01 dadurch erzielt, daß der Aktuator 20 mit einer größeren Spannung beaufschlagt wird als die bisherige Vorspannung beträgt - sich also vergrößert - und der Aktuator 26 mit einer kleineren Spannung als die bisherige Vorspannung beaufschlagt wird, so daß sich dieser verkleinert. Dadurch erhält der Aktuator 20 eine größere Länge b und der Aktuator 26 eine kleinere Länge c, wobei die Längen b > a > c sind.

Die am Umfang 04 zwischen dem Aktuator 20 und dem Aktuator 26 liegenden Aktuatoren 21 bis 25 und 31 bis 27 können jeweils entsprechend ihrer Winkellage mit unterschiedlichen Spannungen beaufschlagt werden, so daß dadurch zu einem definierten Zeitpunkt unterschiedliche Längenänderungen am Zylinderumfang 04 bewirkt werden.

Dabei vergrößern die auf einer ersten knappen Hälfte des Umfanges 04 befindlichen Aktuatoren 20 bis 22 sowie 30; 31 die bisherigen Beträge a ihrer Längenausdehnungen auf die neuen Beträge b bzw. Beträge zwischen a und b.

Die auf einer zweiten knappen Hälfte des Umfanges 04 befindlichen Aktuatoren 24 bis 28 verkleinern die bisherigen Beträge a ihrer Längenausdehnungen auf die neuen Beträge c bzw. Beträge zwischen a und c.

Da der Zylinder 01 rotiert, ändern sich auch die Längen der Aktuatoren 20 bis 31 entsprechend dem Rotationswinkel.

Demzufolge werden mittels zumindest eines Aktuators 17 oder 20 bei Zylindern 01 oder 12 von Druckmaschinen auftretende Schwingungen kompensiert, indem eine partielle Änderung der Länge des Zylinders 01 oder 12 parallel zu dessen Rotationsachse 07 erzeugt wird. Eine Durchbiegung des Zylinders wird somit beeinflusst.

Mit dem Aktuator 17 oder 20 wird also die Größe einer Amplitude von Biegeschwingungen reduziert und/oder eine Frequenz der Biegeschwingungen verändert. Die Biegeschwingungen können auch andere Schwingungsarten, insbesondere Drehschwingungen beeinflussen.

### Bezugszeichenliste

- 01: rotierendes Bauteil, Zylinder
- 02: -
- 03: -
- 04: Umfang (01), Umfangslinie
- 05: -
- 06: Ringnut
- 07: Rotationsachse
- 08: Steuerleitung
- 09: Kanal
- 10: -
- 11: Ausgleichsbohrung (01 )
- 12: rotierendes Bauteil, Zylinder
- 13: Kanal (12)
- 14: Bodenfläche (13)
- 15: -
- 16: Sacklochbohrung (14)
- 17: Aktuator (12)
- 18: -
- 19: -
- 20: Aktuator (01)
- 21: Aktuator (01)
- 22: Aktuator (01)
- 23: Aktuator (01)
- 24: Aktuator (01)
- 25: Aktuator (01)
- 26: Aktuator (01)
- 27: Aktuator (01)
- 28: Aktuator (01)
- 29: Aktuator (01)
- 30: Aktuator (01)
- 31: Aktuator (01)

- I: Ballenlänge (01)

- a: Länge, mittlere, im Ruhezustand
- b: Länge, größere
- c: Länge, kleinere
- d: Betrag, Vorspannung (01)

## Patentansprüche

1. Anordnung zur Verminderung von Biegeschwingungen bei rotierenden Bauteilen (01) unter Verwendung von mindestens einem Aktuator (17; 20 bis 31 ), wobei der im rotierenden Bauteil (01) angeordnete Aktuator (17; 20 bis 31 ) eine in axialer Richtung des rotierenden Bauteils (01) wirkende Kraftkomponente aufweist, **dadurch gekennzeichnet, dass** die Kraftkomponente des Aktuators (17; 20 bis 31 ) in axialer Richtung parallelversetzt zur Rotationsachse (07) des rotierenden Bauteiles (01; 12) in Abhängigkeit von der Drehwinkellage des rotierenden Bauteiles (01; 12) veränderbar ist.

2. Anordnung zur Verminderung von Biegeschwingungen bei rotierenden Bauteilen (01) unter Verwendung von mindestens einem Aktuator (17; 20 bis 31 ), wobei der im rotierenden Bauteil (01) angeordnete Aktuator (17; 20 bis 31) eine in axialer Richtung des rotierenden Bauteils (01) wirkende Kraftkomponente aufweist, **dadurch gekennzeichnet, dass** mehrere Aktuatoren (20 bis 31 ) parallelversetzt zur Rotationsachse (07) des rotierenden Bauteiles (01; 12) in Umfangsrichtung des rotierenden Bauteiles (01) angeordnet sind.

3. Anordnung nach Anspruch 1, **dadurch gekennzeichnet, daß** mehrere Aktuatoren (20 bis 31 ) in Umfangsrichtung des rotierenden Bauteiles (01) angeordnet sind.

4. Anordnung nach einem der Ansprüche 1 bis 2, **dadurch gekennzeichnet, daß** mehrere Aktuatoren (20 bis 31) in axialer Richtung des rotierenden Bauteils (01; 12) angeordnet sind.

5. Anordnung nach Anspruch 3, **dadurch gekennzeichnet, daß** die Aktuatoren (20 bis 31 ) ringförmig am Umfang (04) des rotierenden Bauteils (01) angeordnet sind.

6. Anordnung nach Anspruch 3 oder 4, **dadurch gekennzeichnet, daß** die Aktuatoren (20 bis 31 ) innerhalb der Umfangslinie (04) des rotierenden Bauteils (01) angeordnet sind.

7. Anordnung nach Anspruch 3, **dadurch gekennzeichnet, daß** die Aktuatoren (20 bis 31) jeweils in einer Ringnut (06) des rotierenden Bauteils (01) angeordnet sind.

8. Anordnung nach den Ansprüchen 4 und 7, **dadurch gekennzeichnet, daß** am Umfang (04) des rotierenden Bauteils (01 ) mehrere Aktuatoren (20 bis 31 ) enthaltende in axialer Richtung voneinander beabstandete Ringnuten (06) vorgesehen sind.

9. Anordnung nach Anspruch 7, **dadurch gekennzeichnet, daß** die die Aktuatoren (17; 20 bis 31) enthaltenden Ringnuten (06) in Richtung Mantelfläche des rotierenden Bauteiles (01) verfüllbar oder verschließbar sind.

10. Anordnung nach Anspruch 1, 2, 3 oder 4, **dadurch gekennzeichnet, daß** die Aktuatoren (17; 20 bis 31 ) mit einem Regler verbindbar sind.

11. Anordnung nach einem der Ansprüche 1 bis 2, **dadurch gekennzeichnet, daß** der Aktuator (17; 20 bis 31 ) als Piezoelement ausgebildet ist.

12. Anordnung nach einem der Ansprüche 1 bis 2, **dadurch gekennzeichnet, daß** der Aktuator (17; 20 bis 31 ) aus einem Zweischichtelement besteht.

13. Anordnung nach einem der Ansprüche 1 bis 2, **dadurch gekennzeichnet, daß** auf der Mantelfläche des rotierenden Bauteils (01) Sensoren angeordnet sind.

14. Anordnung nach Anspruch 10, **dadurch gekennzeichnet, daß** die Sensoren mit den jeweiligen Aktuatoren über den Regler verbindbar sind.

15. Anordnung nach Anspruch 10, **dadurch gekennzeichnet, daß** der Regler außerhalb des rotierenden Bauteils (01) angeordnet ist.

16. Anordnung nach Anspruch 10, **dadurch gekennzeichnet, daß** der Regler innerhalb des rotierenden Bauteils (01) angeordnet ist.

17. Anordnung nach den Ansprüchen 1 bis 2, 10 und 14 bis 16, **dadurch gekennzeichnet, daß** die Energieübertragung zumindest zwischen Regler und Sensoren sowie zwischen Regler und Aktuatoren kontaktlos erfolgt.

18. Anordnung nach einem der Ansprüche 1 bis 2, **dadurch gekennzeichnet, daß** der Aktuator (17; 20 bis 31) als Sensor ausgebildet ist.

19. Anordnung nach einem der Ansprüche 1 bis 2, **dadurch gekennzeichnet, daß** das rotierende Bauteil (01) als Zylinder in einer Druckmaschine ausgebildet ist.

20. Anordnung nach Anspruch 19, **dadurch gekennzeichnet, daß** der Zylinder (01) als Formzylinder ausgebildet ist.

21. Anordnung nach Anspruch 19, **dadurch gekennzeichnet, daß** der Zylinder (01) als Übertragungszylinder ausgebildet ist.

22. Anordnung nach Anspruch 17, **dadurch gekennzeichnet, daß** der Zylinder (01) als Gegendruckzylinder ausgebildet ist.

23. Anordnung nach einem der Ansprüche 1 und 2, **dadurch gekennzeichnet, daß** das rotierende Bauteil (01; 12) als Walze insbesondere als Farb-, Feucht- oder Leitwalze einer Rotationsdruckmaschine ausgebildet ist.

24. Anordnung nach Anspruch 3, **dadurch gekennzeichnet, daß** am Umfang (04) voneinander beabstandete Aktuatoren (20 bis 31) zu einem definierten Zeitpunkt unterschiedlich große Längenänderungen (b; c; zwischen b und c) des Bauteils (01) bewirken.

25. Anordnung nach Anspruch 3, **dadurch gekennzeichnet, daß** zumindest die an einer ersten knappen Hälfte des Umfanges (04) befindlichen Aktuatoren (20 bis 22; 30; 31 ) ihre Längenausdehnungen vergrößern.

26. Anordnung nach Anspruch 3, **dadurch gekennzeichnet, daß** zumindest die an einer zweiten knappen Hälfte des Umfanges (04) befindlichen Aktuatoren (24 bis 28) ihre Längenausdehnungen verkleinern.

27. Verfahren zur Kompensation von Schwingungen bei rotierenden Bauteilen (01; 12) in Rotationsdruckmaschinen mittels mindestens eines Aktuators (17; 20 bis 31 ), **dadurch gekennzeichnet, dass** der zumindest eine Aktuator (17; 20 bis 31 ) innerhalb eines Sektors, parallelversetzt zur Rotationsachse (07) des Bauteils (01; 12) sitzt, so dass mit dem Aktuator (17; 20 bis 31 ) eine über den Umfang des rotierenden Bauteiles (01; 12) gesehene partielle Längenänderung des rotierenden Bauteils (01; 12) parallelversetzt zur Rotationsachse (07) des rotierenden Bauteiles (01; 12) erzeugt wird.

28. Verfahren nach Anspruch 27, **dadurch gekennzeichnet, daß** mit dem Aktuator (17; 20 bis 31 ) eine Größe einer Amplitude und/oder eine Frequenz von Schwingungen verändert wird.

## Claims

1. Arrangement for reducing bending vibrations in rotating components (01 ) using at least one actuator (17, 20 to 31 ), whereby the actuator (17, 20 to 31) arranged in the rotating component (01) has a force component acting in the axial direction of the rotating component (01 ), **characterized in that** the force component of the actuator (17, 20 to 31) offset axially parallel with the rotational axis (07) of the rotating component (01, 12) can be changed as a function of the relative position of the rotating component (01, 12).

2. Arrangement for reducing bending vibrations in rotating components (01 ) using at least one actuator (17, 20 to 31 ), whereby the actuator (17, 20 to 31) arranged in the rotating component (01 ) has a force component acting in the axial direction of the rotating component (01), **characterized in that** several actuators (20 to 31) are arranged ) are arranged offset parallel with the rotational axis (07) of the rotating component (01, 12) in the circumferential direction of the rotating component (01).

3. Arrangement according to Claim 1, **characterized in that** several actuators (20 to 31) are arranged in the circumferential direction of the rotating component (01).

4. Arrangement according to one of Claims 1 to 2, **characterized in that** actuators (20 to 31) are arranged in the axial direction of the rotating component (01, 12).

5. Arrangement according to Claim 3, **characterized in that** the actuators (20 to 31) are arranged in a ring at the circumference of the rotating component (01).

6. Arrangement according to Claim 3 or 4, **characterized in that** the actuators (20 to 31) are arranged within the circumference line (04) of the rotating component (01).

7. Arrangement according to Claim 3, **characterized in that** the actuators (20 to 31 ) are each arranged in an annular groove (06) of the rotating component (01).

8. Arrangement according to Claims 4 and 7, **characterized in that** at the circumference (04) of the rotating component (01) there are several axially spaced annular grooves (06) around the circumference of the rotating component.

9. Arrangement according to Claim 7, **characterized in that** the annular grooves (06) containing the actuators (17, 20 to 31 ) can be filled or closed towards the jacket of the rotating component (01).

10. Arrangement according to Claim 1, 2, 3, or 4, **characterized in that** the actuators (17, 20 to 31 ) can be connected to a controller.

11. Arrangement according to one of Claims 1 to 2, **characterized in that** the actuator (17, 20 to 31) is made as a piezoelectric element.

12. Arrangement according to one of Claims 1 to 2, **characterized in that** the actuator (17, 20 to 31 ) consists of an interlayer element.

13. Arrangement according to one of Claims 1 to 2, **characterized in that** sensors are arranged on the jacket surface of the rotating component (01).

14. Arrangement according to Claim 10, **characterized in that** the sensors can be connected with the respective actuators via the controller.

15. Arrangement according to Claim 10, **characterized in that** the controller is arranged outside the rotating component (01).

16. Arrangement according to Claim 10, **characterized in that** the controller is arranged within the rotating component (01).

17. Arrangement according to Claims 1 to 2, 10 and 14 to 16, **characterized in that** the energy transfer at least between controller and sensors and between controller and actuators is contactless.

18. Arrangement according to one of Claims 1 to 2, **characterized in that** the actuator (17, 20 to 31) is made as sensor.

19. Arrangement according to one of Claims 1 to 2, **characterized in that** the rotating component (01) is made as cylinder in a printing press.

20. Arrangement according to Claim 19, **characterized in that** the cylinder (01) is made as plate cylinder.

21. Arrangement according to Claim 19, **characterized in that** the cylinder (01) is made as transfer cylinder.

22. Arrangement according to Claim 17, **characterized in that** the cylinder (01) is made as back-up cylinder.

23. Arrangement according to Claims 1 and 2, **characterized in that** the rotating component (01, 12) is made as roller in particular as inking, damping or guide roller of a web-fed printing press.

24. Arrangement according to Claim 3, **characterized in that** actuators (20 to 31 ) spaced around the circumference (04) effect different changes in length (b; c; between b and c) of the component (01) at a defined point in time.

25. Arrangement according to Claim 3, **characterized in that** at least the actuators (20 to 22, 30, 31 ) on a just less than half of the circumference (04) increase their linear extension.

26. Arrangement according to Claim 3, **characterized in that** at least the actuators (24 to 28) on a just less than half of the circumference (04) reduce their linear extension.

27. Method of compensating for vibrations in rotating components (01, 12) in web-fed printing presses by means of at least one actuator (17, 20 to 31 ), **characterized in that** at least one actuator (17, 20 to 31 ) within a sector is parallel offset to the rotational axis of the component (01, 12) so that with the actuator (17, 20 to 31) there is produced a partial change in length of the rotating component (01, 12) seen over the circumference of the rotating component (01, 12) parallel offset to the rotational axis (07) of the rotating component (01, 12).

28. Method according to Claim 27, **characterized in that** with the actuator (17, 20 to 31 ) there is a change in amplitude or frequency of vibrations.

## Revendications

1. Dispositif d'atténuation des vibrations en flexion dans des composants (01) rotatifs, avec utilisation d'au moins un actionneur (17 ; 20 à 31 ), l'actionneur (17 ; 20 à 31) disposé dans le composant rotatif (01) présentant une composante de force agissant dans la direction axiale du composant rotatif (01), **caractérisé en ce que** la composante de force de l'actionneur (17 ; 20 à 31 ) est modifiable, en direction axiale, de façon décalée parallèlement à l'axe de rotation (07) du composant rotatif (01 ; 12), en fonction de la position angulaire en rotation du composant rotatif (01 ; 12).

2. Dispositif d'atténuation des vibrations en flexion dans des composants (01) rotatifs, avec utilisation d'au moins un actionneur (17 ; 20 à 31 ), l'actionneur (17 ; 20 à 31 ) disposé dans le composant rotatif (01) présentant une composante de force agissant dans la direction axiale du composant rotatif (01), **caractérisé en ce qu'**une pluralité d'actionneurs (17 ; 20 à 31) sont disposés de façon décalée parallèlement à l'axe de rotation (07) du composant rotatif (01 ; 12), dans la direction circonférentielle du composant rotatif (01).

3. Dispositif selon la revendication 1, **caractérisé en ce qu'**une pluralité d'actionneurs (20 à 31) sont disposés dans la direction circonférentielle du composant rotatif (01).

4. Dispositif selon les revendications 1 à 2, **caractérisé en ce qu'**une pluralité d'actionneurs (20 à 31 ) sont disposés dans la direction axiale du composant rotatif (01 ; 12).

5. Dispositif selon la revendication 3, **caractérisé en ce que** les actionneurs (20 à 31) sont disposés en forme d'anneau à la périphérie (04) du composant rotatif (01 ).

6. Dispositif selon la revendication 3 ou 4, **caractérisé en ce que** les actionneurs (20 à 31) sont disposés à l'intérieur de la circonférence (04) du composant rotatif (01 ).

7. Dispositif selon la revendication 3, **caractérisé en ce que** les actionneurs (20 à 31) sont chacun disposés dans une gorge annulaire (06) du composant rotatif (01 ).

8. Dispositif selon les revendications 4 et 7, **caractérisé en ce que** des gorges annulaires (06), espacées les unes des autres en direction axiale, contenant une pluralité d'actionneurs (20 à 31) sont prévues à la périphérie (04) du composant rotatif (01 ).

9. Dispositif selon la revendication 7, **caractérisé en ce que** les gorges annulaires (06), contenant les actionneurs (17 ; 20 à 31 ), sont susceptibles d'être remplies ou fermées dans la direction de la surface d'enveloppe du composant rotatif (01 ).

10. Dispositif selon la revendication 1, 2, 3 ou 4, **caractérisé en ce que** les actionneurs (17 ; 20 à 31) sont susceptibles d'être reliés à un régulateur.

11. Dispositif selon l'une des revendications 1 à 2, **caractérisé en ce que** l'actionneur (17 ; 20 à 31 ) est réalisé sous la forme de piézo-élément.

12. Dispositif selon l'une des revendications 1 à 2, **caractérisé en ce que** l'actionneur (17 ; 20 à 31 ) est formé d'un élément à deux couches.

13. Dispositif selon l'une des revendications 1 à 2, **caractérisé en ce que** des capteurs sont disposés sur la surface d'enveloppe du composant rotatif (01).

14. Dispositif selon la revendication 10, **caractérisé en ce que** les capteurs sont susceptibles d'être reliés aux actionneurs respectifs par l'intermédiaire du régulateur.

15. Dispositif selon la revendication 10, **caractérisé en ce que** le régulateur est disposé à l'extérieur du composant rotatif (01 ).

16. Dispositif selon la revendication 10, **caractérisé en ce que** le régulateur est disposé à l'intérieur du composant rotatif (01).

17. Dispositif selon les revendications 1 à 2, 10 et 14 à 16, **caractérisé en ce que** la transmission d'énergie, au moins entre le régulateur et les capteurs ainsi qu'entre le régulateur et les actionneurs, se fait sans contact.

18. Dispositif selon l'une des revendications 1 à 2, **caractérisé en ce que** l'actionneur (17 ; 20 à 31 ) est réalisé sous la forme de capteur.

19. Dispositif selon l'une des revendications 1 à 2, **caractérisé en ce que** le composant rotatif (01) est réalisé sous la forme de cylindre dans une machine à imprimer.

20. Dispositif selon la revendication 19, **caractérisé en ce que** le cylindre (01) est réalisé sous la forme de cylindre de forme.

21. Dispositif selon la revendication 19, **caractérisé en ce que** le cylindre (01) est réalisé sous la forme de cylindre de transfert.

22. Dispositif selon la revendication 17, **caractérisé en ce que** le cylindre (01) est réalisé sous la forme de cylindre à contre-pression.

23. Dispositif selon l'une des revendications 1 et 2, **caractérisé en ce que** le composant rotatif (01 ; 12) est réalisé sous la forme de rouleau, en particulier de rouleau encreur humidificateur ou de guidage d'une machine à imprimer rotative.

24. Dispositif selon la revendication 3, **caractérisé en ce que** des actionneurs (20 à 31), disposés de façon espacée les uns des autres à la périphérie (04), provoquent, à un moment défini, des variations de longueur (b ; c ; entre b et c), d'ampleur différente, du composant (01).

25. Dispositif selon la revendication 3, **caractérisé en ce que**, au moins les actionneurs (20 à 22 ; 30 ; 31 ) se trouvant juste sur une première moitié de la périphérie (04), subissent une augmentation de leurs longueurs.

26. Dispositif selon la revendication 3, **caractérisé en ce qu'**au moins les actionneurs (24 à 28), se trouvant juste sur une deuxième moitié de la périphérie (04), subissent une diminution de leurs longueurs.

27. Procédé de compensation des vibrations pour des composants rotatifs (01 ; 12) dans des machines à imprimer rotatives, à l'aide d'au moins un actionneur (17 ; 20 à 31), **caractérisé en ce que** le au moins un actionneur (17 ; 20 à 31), à l'intérieur d'un secteur, est placé de façon décalée parallèlement à l'axe de rotation (07) du composant (01 ; 12), de sorte que, avec l'actionneur (17 ; 20 à 31), on produise une modification de longueur partielle, observée sur la circonférence du composant (01 ; 12) rotatif, de ce composant rotatif (01 ; 12), de façon décalée parallèlement à l'axe de rotation (07) du composant rotatif (01 ; 12).

28. Procédé selon la revendication 27, **caractérisé en ce que** la valeur de l'amplitude et/ou la fréquence des vibrations est/sont modifiée(s) à l'aide des actionneurs (17 ; 20 à 31 ).
